# FASCICULE DE BREVET EUROPEEN

(11) **EP 4 033 429 B1**
(45) Date de publication et mention de la délivrance du brevet: **15.11.2023**
(21) Numéro de dépôt: 21153570.3
(22) Date de dépôt: 26.01.2021
(51) Int. Cl.: G06Q 10/08

(54) **PROCÉDÉ ET SYSTÈME D'ACHEMINEMENT DE COLIS À DES DESTINATAIRES URBAINS**
VERFAHREN UND SYSTEM ZUR ZUSTELLUNG VON PAKETEN AN STÄDTISCHEN EMPFÄNGERN
METHOD AND SYSTEM FOR DELIVERING PARCELS TO URBAN RECIPIENTS

(43) Date de publication de la demande: 27.07.2022
(73) Titulaire: ZE COMBI, 31860 Labarthe-sur-Lèze (FR)
(72) Inventeur: Giraud, Cédric, 31190 Grépiac (FR); Allouche, Francis, 75017 Paris (FR); Morellon, Claude, 64200 Biarritz (FR)
(74) Mandataire: Bringer IP

(56) Documents cités:
- WO-A1-2005/028277
- US-A1- 2008 303 248
- Anonymous: "Ze Combi, un nouveau modèle pour la logistique urbaine", , 27 février 2018 (2018-02-27), pages 1-2, XP055805994, Extrait de l'Internet: URL:https://www.agence-adocc.com/wp-conten t/uploads/2019/02/Zecombi.pdf [extrait le 2021-05-19]
- De Varax Aurélie: "ZE Combi pousse plus loin le défi de la livraison du dernier kilomètre", ToulÉco Green, 21 décembre 2017 (2017-12-21), pages 1-2, XP055805995, Extrait de l'Internet: URL:https://www.touleco-green.fr/Avec-son- container-amovible-ZE-Combi-pousse-plus-lo in-le-defi-de,23520 [extrait le 2021-05-19]
- Anonymous: "ZE COMBI au SITL 2018 - www.zecombi.com", , 18 décembre 2019 (2019-12-18), pages 1-2, XP055805998, Extrait de l'Internet: URL:https://www.zecombi.com/ze-combi-au-si tl/ [extrait le 2021-05-19]
- Anonymous: "ZE Combi lance un nouveau mode de livraison en véhicules électriques", Occitanie Invest 2018, 16 novembre 2018 (2018-11-16), pages 1-2, XP055806002, Extrait de l'Internet: URL:https://occitanie-invest.com/ze-combi- lance-nouveau-mode-livraison-vehicules-ele ctriques/ [extrait le 2021-05-19]
- Anonymous: "Solutrans et Transports Logistics Meetings : le bilan !", , 26 novembre 2019 (2019-11-26), pages 1-4, XP055806003, Extrait de l'Internet: URL:https://www.groupestarservice.com/blog /solutrans-et-transports-logistics-meeting s-le-bilan-de-ces-2-evenements/ [extrait le 2021-05-19]
- Angel Marina: "Ze Combi invente un nouveau concept de logistique urbaine", L'usine nouvelle, 27 janvier 2018 (2018-01-27), pages 1-2, XP055806010, Extrait de l'Internet: URL:https://www.usinenouvelle.com/article/ ze-combi-invente-un-nouveau-concept-de-log istique-urbaine.N641723 [extrait le 2021-05-19]
- Anonymous: "Caractéristiques techniques Container Amovible Combi-Cub & Container Fixe Container colis amovible Combi-Cub", , 1 août 2018 (2018-08-01), pages 1-2, XP055806013, Extrait de l'Internet: URL:http://www.zecombi.com/wp-content/uplo ads/2018/08/ZE-COMBI-fiche-technique-conta iner-combi-cub.pdf [extrait le 2021-05-19]

## Description

### Domaine technique de l'invention

L'invention concerne un procédé et un système d'acheminement de colis à des destinataires urbains.

### Arrière-plan technologique

Le volume de colis distribué augmente régulièrement du fait du développement du commerce à distance, plus communément désigné par l'expression de « e-commerce ». La logistique de distribution des colis, en particulier ceux issus du e-commerce, mais pas uniquement, est relativement complexe en particulier dans les centres villes des grandes métropoles.

Pour faciliter l'acheminement des colis dans les centres urbains, il est aujourd'hui courant de scinder l'acheminement des colis entre leur lieu de collecte et leur lieu de distribution en plusieurs trajets parmi lesquels un trajet de collecte du colis entre le lieu de dépose du colis par l'expéditeur et un entrepôt de stockage initial, un trajet de transport entre l'entrepôt de stockage initial et l'entrepôt de stockage final (des trajets intermédiaires associés à des entrepôts de stockage intermédiaire peuvent être prévus selon les distances et les moyens de transport utilisés) et un trajet de livraison du colis entre l'entrepôt de stockage final, généralement localisé en zone péri-urbaine, et le destinataire du colis.

Chaque type de trajet (trajet de collecte, trajet de transport, trajet de distribution) nécessite le recours à des véhicules spécifiques.

A titre d'exemple, il est fréquent que le trajet de collecte mette en oeuvre des camionnettes permettant de récolter les colis sur les lieux de distribution (points relais, entreprises, etc.) associées éventuellement à des gros porteurs pour acheminer les colis vers un entrepôt de stockage de collecte. Le trajet de transport fait appel à des gros porteurs, à des véhicules ferroviaires ou aériens selon les destinations. Le trajet de distribution fait généralement appel à des véhicules plus légers, du type camionnettes thermiques, pour distribuer chaque colis à son point de distribution définitif.

Les études montrent que les trajets de distribution entre le lieu de stockage péri-urbain et les destinataires représentent en moyenne 20% du trafic, occupent 30% de la voirie et se trouvent à l'origine de 25% des émissions de gaz à effet de serre.

Il est donc essentiel d'optimiser la chaine logistique de distribution des colis, en particulier en ce qui concerne les trajets au sein des zones urbaines, désignés aussi par la terminologie de trajets du dernier kilomètre.

Pour ce faire, il a déjà été proposé de mettre en place une nouvelle organisation qui vise la massification des flux entrants dans les zones urbaines et qui consiste à remplacer les camionnettes thermiques du trajet de distribution par un gros porteur pour assurer le trajet entre le centre de stockage périurbain et un centre de stockage urbain, couplé à une pluralité de camionnettes électriques pour assurer le dernier kilomètre entre le lieu de stockage urbain et les destinataires finaux. Cela permet de générer une économie de 20 à 30% par rapport aux solutions antérieures tout en limitant les émissions de gaz à effet de serre. En effet, le gros porteur présente une capacité de transport de l'ordre de huit camionnettes.

Cette solution présente néanmoins l'inconvénient de générer une rupture de charge, c'est-à-dire de nécessiter le transfert des colis à la main entre le gros porteur et les véhicules urbains du dernier kilomètre au sein du centre de stockage urbain. Cette rupture de charge annule en grande partie les bénéfices liées à la massification des flux entrant dans les zones urbaines.

Le déposant a notamment déjà décrit dans les documents XP55805994, XP55805995, XP55805998, XP55806002, XP55806003, XP55806010 et XP55806013 le problème technique qu'il cherche à résoudre et le principe général d'utiliser des véhicules urbains électriques associés à des containers à roues rétractables pour assurer le dernier kilomètre.

Le document WO2005/028277 décrit un chariot comprenant deux séries de roues avants et des roues arrières télescopiques qui nécessitent une manipulation par un opérateur pour pouvoir les déplacer et les fixer dans une position qui permet de loger le chariot dans un coffre d'un véhicule. Ces différentes manipulations sont contraignantes. En outre, la présence de nombreuses roues avants rend le chariot complexe et peu optimisé pour être une utilisation au sein d'un procédé et d'un système d'acheminement des colis à destination de destinataires urbains.

Le document US20080303248 décrit également un chariot dont les roues avants peuvent basculer dans une position rétractée et dont les roues arrières télescopiques nécessitent une manipulation par un opérateur pour pouvoir être déplacées et fixées dans une position qui permet de loger le chariot dans un coffre d'un véhicule. Ces différentes manipulations sont contraignantes et peu compatibles avec un procédé et un système d'acheminement des colis à destination de destinataires urbains.

Les inventeurs ont donc cherché à proposer un procédé et un système de d'acheminement de colis à des destinataires urbains qui pallient au moins certains des inconvénients des solutions actuellement mises en oeuvre au sein des zones urbaines.

### Objectifs de l'invention

L'invention vise à fournir un procédé et un système d'acheminement de colis à des destinataires urbains qui pallient au moins certains des inconvénients des solutions connues.

L'invention vise en particulier à fournir, dans au moins un mode de réalisation de l'invention, un procédé et un système d'acheminement de colis à des destinataires urbains qui suppriment la rupture de charge au cours du dernier kilomètre et peut être mise en oeuvre par une personne seule.

L'invention vise aussi à fournir, dans au moins un mode de réalisation de l'invention, un procédé et un système d'acheminement de colis à des destinataires urbains qui puissent être mis en oeuvre en dehors de tout entrepôt de stockage.

L'invention vise aussi à fournir, dans au moins un mode de réalisation de l'invention, un procédé et un système d'acheminement de colis à des destinataires urbains qui ne nécessitent pas le recours à des chariots élévateurs.

L'invention vise aussi à fournir, dans au moins un mode de réalisation de l'invention, un procédé et un système d'acheminement de colis à des destinataires urbains qui n'imposent pas le recours à des véhicules équipés de hayons pour le dernier kilomètre.

L'invention vise aussi à fournir, dans au moins un mode de réalisation de l'invention, un procédé et un système d'acheminement de colis à des destinataires urbains qui peuvent être adaptés à l'acheminement de produits en température dirigée, c'est-à-dire à température contrôlée et dépendante des colis transportés.

### Exposé de l'invention

Pour ce faire, l'invention concerne un procédé d'acheminement d'une pluralité de colis à une pluralité de destinataires urbains à partir d'un espace de stockage périurbain comprenant les étapes consistant à :
- loger ladite pluralité de colis dans une pluralité de containers à roues rétractables, au moins un container à roues rétractables comprenant :
   o un caisson comprenant au moins une ouverture d'accès au caisson pour pouvoir y loger lesdits colis,
   ∘ des organes roulants de déplacement dudit caisson dans un sens d'avancement privilégié et selon une direction principale d'avancement, dite direction longitudinale,
   ∘ au moins un coffret de logement de chaque organe roulant agencé sous ledit caisson,
   ∘ chaque organe roulant étant monté mobile par rapport au caisson entre une position, dite position déployée, dans laquelle il s'étend hors dudit coffret et permet le déplacement par roulement dudit container hors d'un véhicule électrique urbain, et une position, dite position rétractée, dans laquelle il est logé principalement dans ledit coffret tout en permettant le déplacement par roulement dudit container sur ledit plancher bas dudit véhicule électrique urbain, ledit passage de ladite position déployée à ladite position rétractée étant obtenue spontanément lors du chargement du container dans ledit véhicule électrique urbain par la combinaison du déplacement dudit caisson selon la direction longitudinale et un contact entre le container et une butée transversale ménagée sous ledit plancher bas dudit véhicule électrique urbain, et le passage de ladite position rétractée à ladite position déployée étant obtenu spontanément par gravité lors du déchargement dudit container dudit véhicule électrique urbain,
- transporter ladite pluralité de containers à roues rétractables dans un véhicule roulant vers une base logistique urbaine,
- décharger lesdits containers à roues rétractables dans ladite base logistique urbaine,
- charger lesdits containers à roues rétractables dans une pluralité de véhicules électriques urbains à plancher bas et sans moyen de levage,
- déplacer lesdits véhicules électriques urbains chargés desdits containers de ladite base logistique urbaine vers lesdits destinataires urbains et décharger lesdits containers desdits véhicules électriques urbains sans moyen de levage à proximité desdits destinataires,
- livrer chaque colis logé dans chaque container à roues rétractables déchargé de chaque véhicule électrique urbain à chaque destinataire du colis.

Le procédé selon l'invention permet donc de supprimer la rupture de charge du dernier kilomètre en associant des containers à roues rétractables logeant les colis à acheminer et des véhicules électriques urbains à plancher bas configurés pour permettre de charger et décharger les containers sans moyen de levage.

Dans tout le texte, on désigne par plancher bas, un véhicule dont le plancher de réception des containers s'étend à moins de 30 cm du sol, de préférence moins de 20 cm du sol.

Le procédé selon l'invention permet en outre de massifier les flux entrants dans les zones urbaines en remplaçant les camionnettes thermiques du trajet de distribution des solutions connues par un gros porteur qui assure le trajet entre le centre de stockage périurbain et une base logistique urbaine, associé à des véhicules électriques configurés pour embarquer des containers à roues rétractables.

L'originalité du procédé selon l'invention réside à la fois dans l'utilisation de véhicules électriques à plancher bas pour assurer le trajet du dernier kilomètre et dans l'utilisation de containers à roues rétractables compatibles avec ces véhicules électriques à plancher bas qui permettent un chargement et déchargement des containers sans moyen de levage.

Le procédé technique selon l'invention met en oeuvre des moyens techniques (containers à roues rétractables, véhicules urbains électriques à plancher bas, véhicules roulants) qui coopèrent les uns avec les autres pour fournir une solution technique au problème technique de la rupture de charge des procédés d'acheminement connus.

Selon l'invention, au moins un container à roues rétractables comprend :
- un caisson comprenant au moins une ouverture d'accès au caisson pour pouvoir y loger lesdits colis,
- des organes roulants de déplacement dudit caisson dans un sens d'avancement privilégié et selon une direction principale d'avancement, dite direction longitudinale,
- au moins un coffret de logement de chaque organe roulant agencé sous ledit caisson,
- chaque organe roulant étant monté mobile par rapport au caisson entre une position, dite position déployée, dans laquelle il s'étend hors dudit coffret et permet le déplacement par roulement dudit container hors dudit véhicule, et une position, dite position rétractée, dans laquelle il est logé principalement dans ledit coffret tout en permettant le déplacement par roulement dudit container sur ledit plancher bas dudit véhicule électrique urbain, ledit passage de ladite position déployée à ladite position rétractée étant obtenue spontanément lors du chargement du container dans ledit véhicule par la combinaison du déplacement dudit caisson selon la direction longitudinale et un contact entre le container et une butée transversale ménagée sous ledit plancher bas dudit véhicule électrique urbain, et le passage de ladite position rétractée à ladite position déployée étant obtenu spontanément par gravité lors du déchargement dudit container dudit véhicule.

Selon cet aspect de l'invention, le container à roues rétractables présente la particularité de disposer d'organes roulants rétractables configurés pour basculer spontanément de leur position rétractée à leur position déployée et inversement par la combinaison du déplacement du container et d'une butée transversale agencée sous la plateforme du véhicule (pour le passage de la position déployée vers la position rétractée) et par la gravité (pour le passage de la position rétractée vers la position déployée).

Ainsi, un opérateur peut charger et décharger le container d'un véhicule présentant une plateforme horizontale de réception de ce container et une butée transversale ménagée sous la plateforme, sans difficultés particulières, sans effort, et sans équipement spécifique. En particulier, le container permet de résoudre la problématique de la rupture de charge en supprimant le besoin de déplacer les colis d'un véhicule à un autre lors de la livraison du dernier kilomètre. Le container permet son utilisation à la fois pour le transport vers le dernier kilomètre, pour le transport du dernier kilomètre et pour son déplacement jusqu'au lieu de livraison final.

Avantageusement et selon l'invention, ladite étape qui consiste à livrer chaque colis du container transporté par chaque véhicule électrique urbain comprend en outre une étape de déplacement du container à roues rétractables par un bras amovible motorisé permettant de faciliter le déplacement du container dans les rues piétonnes et dans les entrepôts notamment. D'une manière générale, ce bras motorisé permet le déplacement d'un container à roues rétractables sur toute les surfaces (intérieures et/ou extérieures).

Selon cet aspect de l'invention, le déplacement d'un container à roues rétractables, une fois déchargé d'un véhicule électrique, est facilité par l'utilisation d'un bras amovible motorisé configuré pour venir en prise sur le container. Cela permet notamment de faciliter le déplacement des containers dans les rues piétonnes et les entrepôts notamment sans nécessiter un effort substantiel de l'opérateur en charge de la préparation et de la livraison des colis.

Selon une variante, les containers sont en outre équipés de moyens de liaison entre eux de telle sorte qu'un opérateur peut former une chaine de containers en les reliant entre eux et utiliser le bras amovible motorisé pour déplacer le premier container de la chaine de containers, ce qui entraine le déplacement de proche en proche de l'ensemble de la chaine de containers ainsi formée.

L'invention concerne aussi un système d'acheminement d'une pluralité de colis à une pluralité de destinataires urbains à partir d'un espace de stockage périurbain comprenant :
- une pluralité de containers à roues rétractables configurés pour pouvoir y loger ladite pluralité de colis à acheminer,
- un véhicule roulant adapté pour y loger ladite pluralité de containers à roues rétractables et destiné à les déplacer vers une base logistique urbaine,
- une pluralité de véhicules électriques urbains à plancher bas adaptés pour recevoir chacun au moins un container à roues rétractables et destinés à livrer chaque colis à leur destinataire.

Selon l'invention, au moins un container à roues rétractables comprend :
- un caisson comprenant au moins une ouverture d'accès au caisson pour pouvoir y loger lesdits colis,
- des organes roulants de déplacement dudit caisson dans un sens d'avancement privilégié et selon une direction principale d'avancement, dite direction longitudinale,
- au moins un coffret de logement de chaque organe roulant agencé sous ledit caisson,
- chaque organe roulant étant monté mobile par rapport au caisson entre une position, dite position déployée, dans laquelle il s'étend hors dudit coffret et permet le déplacement par roulement dudit container hors dudit véhicule, et une position, dite position rétractée, dans laquelle il est logé principalement dans ledit coffret tout en permettant le déplacement par roulement dudit container sur ledit plancher bas dudit véhicule électrique urbain, ledit passage de ladite position déployée à ladite position rétractée étant obtenue spontanément lors du chargement du container dans ledit véhicule par la combinaison du déplacement dudit caisson selon la direction longitudinale et un contact entre le container et une butée transversale ménagée sous ledit plancher bas dudit véhicule électrique urbain, et le passage de ladite position rétractée à ladite position déployée étant obtenu spontanément par gravité lors du déchargement dudit container dudit véhicule.

Les avantages et effets techniques d'un procédé selon l'invention s'appliquent *mutatis mutandis* à un système selon l'invention.

Un système selon l'invention met avantageusement en oeuvre un procédé selon l'invention et le procédé selon l'invention est avantageusement mis en oeuvre par un système selon l'invention.

Avantageusement et selon l'invention, chaque véhicule électrique urbain est en outre équipé d'un bras amovible motorisé permettant de faciliter le déplacement du container dans des rues piétonnes ou les entrepôts notamment, et d'une manière générale sur toutes les surfaces intérieures et/ou extérieures.

Avantageusement, un container à roues rétractables d'un système selon l'invention comprend en outre, pour chaque organe roulant, une armature longitudinale comprenant à une première extrémité longitudinale, au moins une roulette de contact avec ladite butée transversale, et à une seconde extrémité longitudinale, un étrier de support dudit organe roulant monté mobile en rotation par rapport à ladite armature autour d'un axe transversal, dit axe de pivotement, permettant audit organe roulant de passer de ladite position déployée à ladite position rétractée lors du chargement du container dans ledit véhicule et inversement lors du déchargement dudit container hors dudit véhicule, chaque roulette de contact formant en outre des moyens de roulement additionnels dudit container sur ladite plateforme horizontale dudit véhicule lorsque lesdits organes roulants sont dans ladite position rétractée.

Selon cet aspect avantageux de l'invention, chaque organe roulant est porté par une armature longitudinale équipée de roulettes de contact configurées pour faciliter le chargement du container dans le véhicule. En outre, ces roulettes participent au déplacement par roulement du container sur la plateforme du véhicule lorsque le container est logé dans le véhicule.

Chaque organe roulant est en outre monté sur un étrier pivotant par rapport à ladite armature entre la position rétractée et la position déployée et inversement.

Avantageusement et selon l'invention, chaque étrier de support dudit organe roulant d'un container comprend :
- un arbre formant l'axe de pivotement s'étendant dans une lumière oblongue verticale ménagée dans ladite armature et configuré pour pouvoir se déplacer spontanément par gravité dans ladite lumière oblongue d'une position, dite position verrouillée, à une position, dite position libre, et inversement par contact dudit organe roulant avec le sol,
- une patte de verrouillage configurée pour venir s'encastrer dans une mortaise formée dans ladite armature longitudinale dans ladite position verrouillée et pour pouvoir s'en désolidariser spontanément sous l'effet de la gravité lors du passage vers ladite position libre.

Selon cet aspect de l'invention, chaque organe roulant peut présenter trois positions distinctes : une position déployée verrouillée dans laquelle l'organe roulant est sorti du coffret de logement et la patte de verrouillage associée est encastrée dans la mortaise conjuguée formée dans l'armature longitudinale ; une position déployée libre dans laquelle l'organe roulant est sorti du coffret de logement et la patte de verrouillage associée est désolidarisée de la mortaise conjuguée sous l'effet de la gravité (l'organe roulant ne touchant pas le sol dans cette position du fait du déplacement de l'arbre de pivotement dans la lumière oblongue verticale) ; une position rétractée dans laquelle l'organe roulant est pivoté par rapport à la position déployée et est logé dans le coffret de logement.

Avantageusement et selon l'invention, au moins un véhicule électrique urbain comprend une plateforme de réception dudit container agencée en regard d'une ouverture d'accès au véhicule, ladite plateforme s'étendant à une distance inférieure à 30 cm sol, de préférence inférieure à 20 cm du sol, et supérieure à la distance qui sépare, dans la dite position déployée desdits organes roulants, l'axe de pivotement et la surface de contact desdits organes roulants avec le sol, et ladite plateforme comprenant une butée transversale ménagée sous la plateforme dudit véhicule qui présente une portion inclinée formant une butée d'élévation dudit container par contact avec desdites roulettes de contact dudit container et permettant de passer lesdits organes roulants de ladite position verrouillée à ladite position libre, et une portion verticale s'étendant vers le sol depuis ladite butée d'élévation formant une butée de basculement dudit organe roulant de ladite position déployée libre à ladite position rétractée.

Ainsi et selon cet aspect de l'invention, lors du déplacement du container vers un véhicule selon l'invention selon la direction longitudinale, les roulettes de contact entre en contact avec la butée d'élévation, ce qui permet de soulever légèrement le container du sol, et entraine spontanément le passage de l'organe roulant de la position déployée verrouillée à la position déployée libre, par la désolidarisation entre la patte de verrouillage et la mortaise associée qui résulte du coulissement de l'arbre de pivotement dans la lumière de guidage verticale. La poursuite du déplacement le long de la direction longitudinale entraine le contact entre l'organe roulant et la butée de basculement, ce qui entraine spontanément le passage de l'organe roulant de la position déployée libre à la position rétractée par pivotement de l'arbre de pivotement.

De préférence, la plateforme est fixe, horizontale et s'étend dans un plan sensiblement parallèle au sol sur lequel repose le véhicule selon l'invention. Cela étant, selon d'autres variantes, la plateforme peut présenter une légère inclinaison par rapport à l'horizontale, par exemple un angle de 10° par rapport à l'horizontale. Selon ce mode de réalisation spécifique, la plateforme peut être montée sur des moyens élastiques, tels que des ressorts, configurés pour maintenir la plateforme selon cet angle de 10°, en l'absence du container, et être comprimés par le container, lorsque ce dernier est chargé sur la plateforme, de telle sorte qu'elle se positionne à l'horizontale. Un des avantages de ce mode réalisation spécifique est de permettre aux ressorts d'exercer une force d'élévation du container vers le plafond du véhicule, ce qui a pour effet de coincer le container entre la plateforme et le plafond et d'éviter tout déplacement du container à l'intérieur du véhicule.

L'invention concerne également un procédé et un système d'acheminement de colis à des destinataires urbains caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un procédé selon l'invention,
[Fig. 2] est une autre représentation du procédé de la figure 1,
[Fig. 3] est une vue schématique en perspective d'un véhicule à plancher bas d'un système selon un mode de réalisation de l'invention,
[Fig. 4] est une vue schématique de côté d'un container à roues rétractables d'un système selon un mode de réalisation de l'invention,
[Fig. 5] est une vue schématique en perspective de dessous d'un organe roulant d'un container d'un système selon un mode de réalisation de l'invention,
[Fig. 6] est une vue schématique en perspective de dessous-avant de l'organe roulant de la figure 5,
[Fig. 7a] est une vue schématique de côté du container d'un système selon un mode de réalisation de l'invention en phase de chargement dans un véhicule, l'organe roulant avant représenté étant dans la position déployée verrouillée,
[Fig. 7b] est une vue schématique de côté du container selon un mode de réalisation de l'invention en phase de chargement dans un véhicule, l'organe roulant avant représenté basculant dans la position déployée libre,
[Fig. 7c] est une vue schématique de côté du container selon un mode de réalisation de l'invention en phase de chargement dans un véhicule, l'organe roulant avant représenté étant dans la position déployée libre,
[Fig. 7d] est une vue schématique de côté du container selon un mode de réalisation de l'invention en phase de chargement dans un véhicule, l'organe roulant avant représenté basculant dans la position rétractée,
[Fig. 7e] est une vue schématique de côté du container selon un mode de réalisation de l'invention en phase de chargement dans un véhicule, l'organe roulant avant représenté étant dans la position rétractée,
[Fig. 7f] est une vue schématique de côté du container selon un mode de réalisation de l'invention chargé dans un véhicule, les organes roulants avant et arrière représentés étant chacun dans la position rétractée,
[Fig. 8] est une vue schématique en coupe d'une plateforme horizontale d'un véhicule d'un système selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

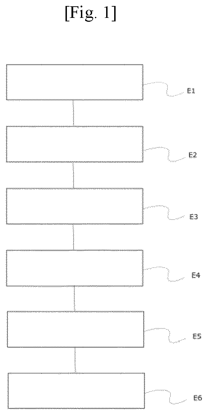

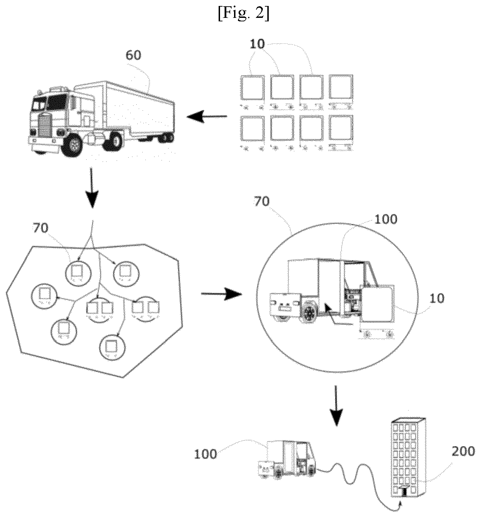

La figure 1 illustre schématiquement un procédé d'acheminement d'une pluralité de colis à une pluralité de destinataires urbains 200 à partir d'un espace de stockage périurbain selon l'invention. La figure 2 est une autre représentation du procédé de la figure 1.

Le procédé comprend une première étape E1 qui consiste à loger ladite pluralité de colis dans une pluralité de containers 10 à roues rétractables. Cette étape n'est pas représentée sur la figure 2 et peut être mise en oeuvre par tous types de moyens connus (opérateurs, moyens automatiques, etc.)

Le procédé comprend une deuxième étape E2 qui consiste à transporter ladite pluralité de containers à roues rétractables 10 dans un véhicule roulant 60 vers des bases logistiques urbaines 70. Selon cet aspect de l'invention, un véhicule unique transporte ladite pluralité de containers 10 depuis un entrepôt de stockage périurbain jusqu'à une ou plusieurs bases logistiques urbaines 70. Sur la figure 2, plusieurs bases logistiques urbaines ont été représentées, étant entendu que selon une autre variante de réalisation, une base urbaine peut être desservie par un seul véhicule de transport ou un véhicule de transport 60 peut desservir plusieurs bases logistiques urbaines 70.

Le procédé comprend une troisième étape E3 qui consiste à décharger lesdits containers à roues rétractables 10 dans chaque base logistique urbaine 70. Cette étape n'est pas représentée sur la figure 2 et peut être mise en oeuvre par tous types de moyens connus.

Le procédé comprend une quatrième étape E4 qui consiste à charger lesdits containers 10 à roues rétractables dans une pluralité de véhicules 100 électriques urbains à plancher bas. Une base logistique urbaine 70 peut comprendre un ou plusieurs véhicules électriques urbains selon le volume de containers à roues rétractables qu'il reçoit.

Le procédé comprend une cinquième étape E5 qui consiste à déplacer chaque véhicule électrique urbain à proximité des destinataires des colis et à décharger du véhicule le container sans moyen de levage.

Enfin, le procédé comprend une dernière étape E6 qui consiste à livrer chaque colis logé dans chaque container 10 à roues rétractables à chaque destinataire du colis.

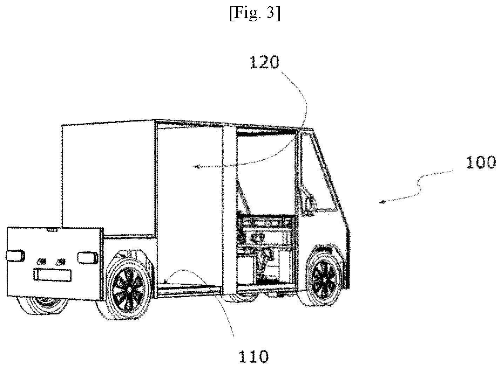

La figure 3 illustre schématiquement un véhicule 100 d'un système selon un mode de réalisation de l'invention qui comprend une plateforme de réception d'un container 10 à roues rétractables agencée en regard d'une ouverture d'accès au véhicule. Cette plateforme s'étend de préférence à une distance inférieure à 30 cm du sol, de préférence inférieure à 20 cm du sol pour faciliter les opérations de chargement et de déchargement décrites ultérieurement.

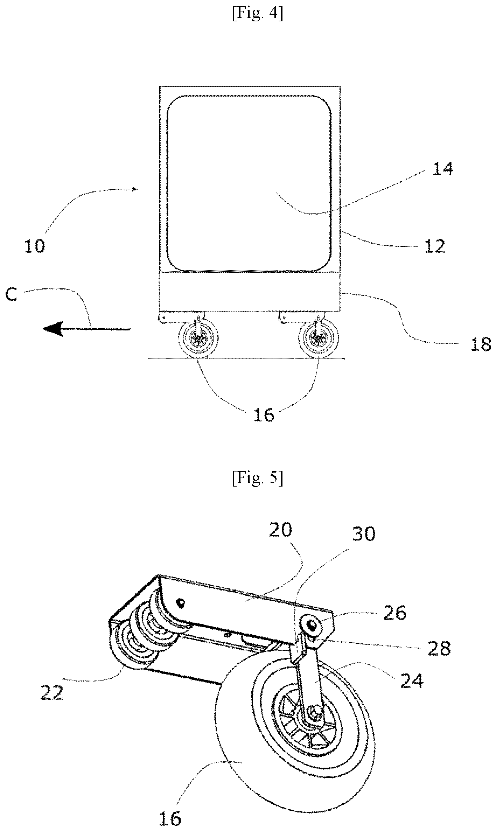

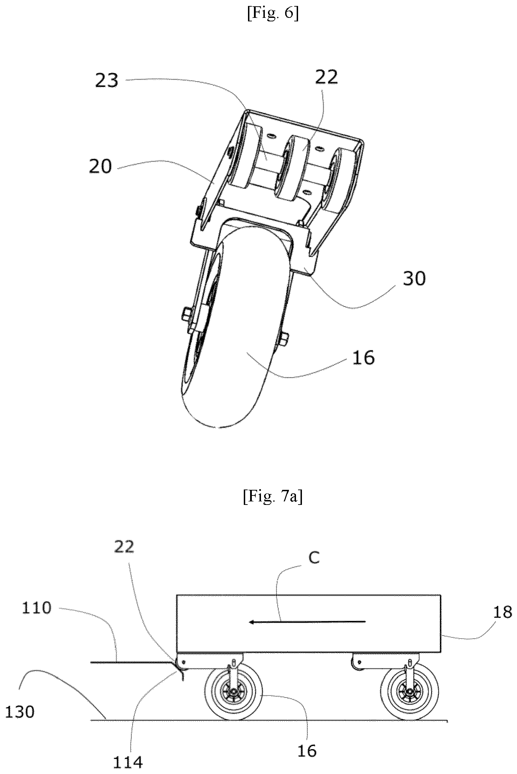

La figure 4 illustre schématiquement un container 10 d'un système selon l'invention. Ce container 10 est destiné à être chargé et déchargé d'un véhicule 100 comprenant une plateforme 110 qui s'étend en regard d'une ouverture 120 d'accès au véhicule. La particularité du container 10 à roues rétractables d'un système selon l'invention et d'un véhicule d'un système selon l'invention est que le chargement et le déchargement du container du véhicule peut être réalisé par une seule personne sans moyen de levage. Ce chargement et déchargement peut donc être réalisé n'importe où et notamment à proximité des destinataires à livrer. Le principe de chargement est décrit en lien avec les figures 7a à 7f.

Le container comprend un caisson 12 comprenant au moins une ouverture 14 d'accès au caisson pour pouvoir y loger des marchandises, non représentées sur les figures à des fins de clarté.

Le container comprend également des organes roulants 16 de déplacement du caisson dans un sens d'avancement privilégié, et correspondant à la direction du container lors du chargement du container dans un véhicule. Cette direction est représentée par la flèche C sur les figures.

Le container comprend également un coffret 18 de logement de chaque organe roulant agencé sous le caisson 12. Dans le mode de réalisation des figures, un seul coffret 18 peut loger l'ensemble des organes roulants 16. Selon d'autres modes de réalisation, chaque organe roulant peut comprendre son propre coffret.

Les organes roulants 16 sont configurés pour pouvoir se déplacer d'une position, dite position déployée, dans laquelle ils s'étendent hors du coffret 18 et permettent ainsi le déplacement du container 10 sur un sol 130, et une position, dite position rétractée, dans laquelle ils sont logés principalement dans le coffret 18 lorsque le container est dans un véhicule. La particularité du container d'un système selon l'invention est d'obtenir spontanément par simple déplacement du container vers le véhicule le basculement des organes roulant de la position déployée à la position rétractée et inversement.

Sur les figures 7a à 7f, seuls les organes roulants et le coffret 18 sont représentés à des fins de clarté pour illustrer le mécanisme permettant aux organes roulants de basculer d'une position déployée à une position rétractée, étant entendu que le coffret est surmonté en pratique du caisson 12.

Les figures 5 et 6 illustrent schématiquement l'environnement de l'organe roulant 16 selon un mode de réalisation de l'invention.

L'organe roulant 16 est monté sur une armature longitudinale 20 formée par exemple d'un profilé à section droite transversale en forme de U et comprenant à une première extrémité longitudinale, trois roulettes 22 de contact portées par un même arbre mécanique 23 qui s'étend de part et d'autre des flancs du profilé formant l'armature longitudinale et à l'extrémité longitudinale opposée, un étrier 24 de support de l'organe roulant 16. Cet étrier 24 comprend une première extrémité qui est montée mobile en rotation par rapport à l'armature 20 autour d'un arbre de pivotement 26 et une extrémité opposée qui forme un pallier de l'organe roulant 16.

La base du profilé en forme de U de l'armature longitudinale est par exemple solidarisée au coffret 18 par des moyens de boulonnerie ou tous moyens équivalents, non représentés sur les figures à des fins de clarté.

On observe sur la figure 5 la portion inférieure d'une lumière oblongue 28 verticale ménagée dans l'armature 20 et dans laquelle s'étend l'arbre de pivotement 26. Ainsi, l'arbre de pivotement 26 peut se déplacer spontanément par gravité dans la lumière oblongue 28 d'une position, dite position verrouillée, à une position, dite position libre, et inversement par contact de l'organe roulant 16 avec le sol 130.

L'étrier 24 comprend également une patte de verrouillage 30 configurée pour venir s'encastrer dans une mortaise 32 formée dans la partie inférieure des flancs de l'armature, à l'aplomb de la patte de verrouillage lorsque l'organe roulant est dans la position déployée verrouillée.

La patte de verrouillage 30 est configurée pour pouvoir se désolidariser spontanément par gravité de la mortaise 32 lors du passage de l'organe roulant de la position rétractée à la position déployée libre comme illustré en lien avec les figures 7a à 7f.

La patte de verrouillage 30 s'étend transversalement de part et d'autre des flancs de ladite armature de manière à former une butée longitudinale qui entrave le balancement de l'organe roulant par contact avec l'armature lors du déchargement du container. Comme illustré sur la figure 6, la patte de verrouillage comprend également un évidement qui permet le passage de l'organe roulant 16.

Le principe de chargement du container dans un véhicule va maintenant être expliqué en lien avec les figures 7a à 7f.

Sur ces figures, seuls les organes roulants et le coffret 18 sont représentés à des fins de clarté. En outre, le véhicule de chargement n'est pas représenté à l'exception de la plateforme horizontale 110 et d'une butée transversale 112 qui s'étend transversalement sous la plateforme horizontale au niveau de la porte d'accès au véhicule.

Un opérateur déplace le container jusqu'à atteindre la position représentée sur la figure 7a dans laquelle les roulettes de contact 22 entrent en contact avec la butée 112 transversale du véhicule.

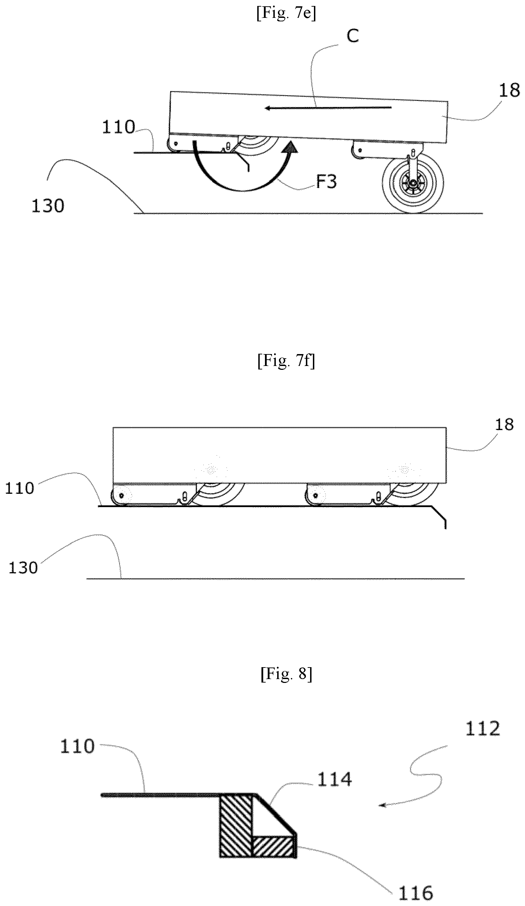

Cette butée 112 est représentée schématiquement en coupe partielle par la figure 8 et comprend une portion inclinée 114 qui forme une butée d'élévation du container et une portion verticale 116 s'étendant vers le sol depuis la butée d'élévation et formant une butée de basculement comme expliqué ci-après.

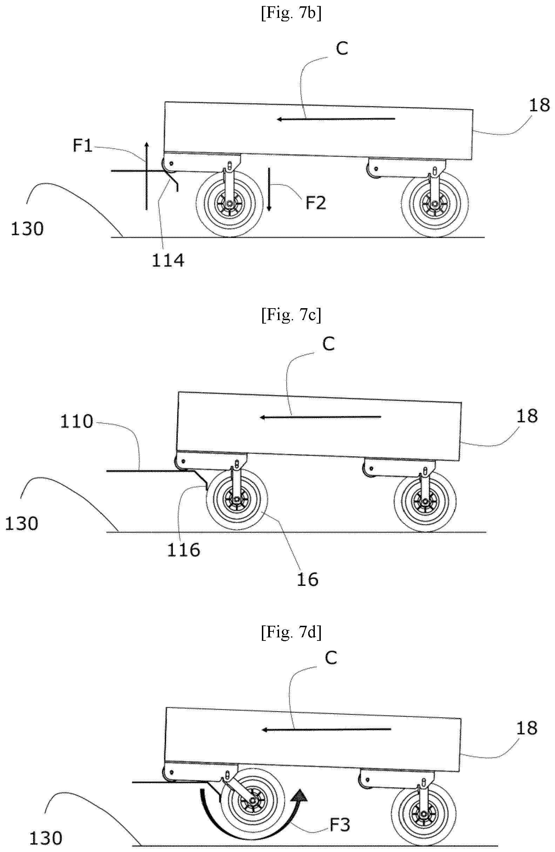

A partir de la position de la figure 7a, lorsque l'opérateur pousse le container suivant la direction représentée par la flèche C vers l'intérieur du véhicule, les roulettes 22 grimpent la butée d'élévation 114, ce qui a pour conséquence de lever l'avant de container (représenté par la flèche F1 sur la figure 7b) et de déplacer l'arbre 26 dans la lumière oblongue 28 sous l'effet de la gravité (représenté par la flèche F2 sur la figure 7b). Le déplacement de l'arbre 26 dans la lumière oblongue 28 libère également la languette de verrouillage 30 de la mortaise 32 conjuguée.

A partir de la position de la figure 7b, lorsque l'opérateur poursuit son déplacement du container selon la direction représentée par la flèche C vers l'intérieur du véhicule, les roulettes 22 roulent sur la plateforme horizontale et l'organe roulant 16 vient en butée contre la butée 116 de basculement.

A partir de la position de la figure 7c, lorsque l'opérateur poursuit son déplacement du container selon la direction représentée par la flèche C vers l'intérieur du véhicule, l'organe roulant 16 pivote dans le sens antihoraire en suivant la rotation représentée par la flèche F3 sur les figures 7d et 7e, jusqu'à atteindre la position représentée par la figure 7e dans laquelle l'organe roulant 16 est logé dans le coffret 18.

Une fois que la première paire d'organes roulant 16 est logée dans le coffret, si l'opérateur poursuit son déplacement du container selon la direction représentée par la flèche C vers l'intérieur du véhicule, les organes roulants arrière vont suivre le même principe pour basculer de la position déployée à la position rétractée.

La figure 7f illustre schématiquement les organes roulants logés dans le coffret lorsque le container est totalement chargé dans le véhicule.

Lors du déchargement du container du véhicule, les opérations inverses sont rencontrées de telle sorte qu'un opérateur puisse simplement décharger le container sans moyen de levage et sans assistance particulière.

Un système et un procédé selon l'invention sont principalement destinés à transporter des containers à roues rétractables d'un espace de stockage périurbain à des destinataires urbains.

Cela étant et selon une variante de l'invention, le système peut également comprendre, en plus des containers à roues rétractables, des moyens de transport de palettes. Bien évidemment, un même véhicule électrique urbain ne peut simultanément transporter un container à roues rétractables et les moyens de transport des palettes. Selon le besoin, l'opérateur utilise un container à roues rétractables ou les moyens de transport des palettes. Ces moyens de transport des palettes comprennent par exemple une platine à rouleaux portée par un train de roues, la platine s'étendant à hauteur de la plateforme du véhicule électrique urbain.

Ainsi, les palettes peuvent être déposées par un opérateur (manuellement ou au moyen d'une transpalette adaptée) sur cette platine à rouleaux, puis l'opérateur déplace le train de roues surmonté des palettes à charger en regard de l'ouverture du véhicule et fait rouler les palettes sur la platine à rouleaux jusqu'à l'intérieur du véhicule.

## Revendications

1. Procédé d'acheminement d'une pluralité de colis à une pluralité de destinataires urbains (200) à partir d'un espace de stockage périurbain **caractérisé en ce qu'**il comprend les étapes consistant à :
- loger (E1) ladite pluralité de colis dans une pluralité de containers à roues rétractables, au moins un container à roues rétractables comprenant :
∘ un caisson (12) comprenant au moins une ouverture d'accès au caisson pour pouvoir y loger lesdits colis,
∘ des organes roulants (16) de déplacement dudit caisson dans un sens d'avancement privilégié et selon une direction principale d'avancement, dite direction longitudinale,
∘ au moins un coffret de logement de chaque organe roulant agencé sous ledit caisson,
∘ chaque organe roulant (16) étant monté mobile par rapport au caisson entre une position, dite position déployée, dans laquelle il s'étend hors dudit coffret et permet le déplacement par roulement dudit container hors d'un véhicule électrique urbain, et une position, dite position rétractée, dans laquelle il est logé principalement dans ledit coffret tout en permettant le déplacement par roulement dudit container sur ledit plancher bas dudit véhicule électrique urbain, ledit passage de ladite position déployée à ladite position rétractée étant obtenue spontanément lors du chargement du container dans ledit véhicule électrique urbain par la combinaison du déplacement dudit caisson selon la direction longitudinale et un contact entre le container et une butée transversale ménagée sous ledit plancher bas dudit véhicule électrique urbain, et le passage de ladite position rétractée à ladite position déployée étant obtenu spontanément par gravité lors du déchargement dudit container dudit véhicule électrique urbain, O
- transporter (E2) ladite pluralité de containers à roues rétractables dans un véhicule roulant vers une base logistique urbaine,
- décharger (E3) lesdits containers à roues rétractables dans ladite base logistique urbaine,
- charger (E4) lesdits containers à roues rétractables dans une pluralité de véhicules électriques urbains à plancher bas sans moyen de levage,
- déplacer (E5) lesdits véhicules électriques urbains chargés desdits containers de ladite base logistique urbaine vers lesdits destinataires urbains et décharger lesdits containers desdits véhicules électriques urbains sans moyen de levage à proximité desdits destinataires,
- livrer (E6) chaque colis logé dans chaque container à roues rétractables déchargé de chaque véhicule électrique urbain à chaque destinataire de colis.

2. Procédé d'acheminement selon la revendication 1, **caractérisé en ce que** ladite étape qui consiste à livrer (E6) chaque colis du container transporté par chaque véhicule électrique urbain comprend en outre une étape de déplacement du container à roues rétractables par un bras amovible motorisé permettant de faciliter le déplacement du container dans des rues piétonnes ou des entrepôts à proximité desdits destinataires.

3. Système d'acheminement d'une pluralité de colis à une pluralité de destinataires urbains à partir d'un espace de stockage périurbain comprenant :
- une pluralité de containers (10) à roues rétractables configurés pour pouvoir y loger ladite pluralité de colis à acheminer,
- au moins un véhicule (20) roulant adapté pour y loger ladite pluralité de containers (10) à roues rétractables et destiné à les déplacer vers une base logistique urbaine,
- une pluralité de véhicules électriques (100) urbains à plancher bas adaptés pour recevoir chacun au moins un container (10) à roues rétractables et destinés à livrer chaque colis à chaque destinataire, lesdites véhicules et lesdits containers étant configurés pour permettre un chargement et déchargement de chaque container à roues rétractables dans chaque véhicule sans moyen de levage,
**caractérisé en ce qu'**au moins un container à roues rétractables comprend :
- un caisson (12) comprenant au moins une ouverture d'accès au caisson pour pouvoir y loger lesdits colis,
- des organes roulants (16) de déplacement dudit caisson dans un sens d'avancement privilégié et selon une direction principale d'avancement, dite direction longitudinale,
- au moins un coffret de logement de chaque organe roulant agencé sous ledit caisson,
- chaque organe roulant (16) étant monté mobile par rapport au caisson entre une position, dite position déployée, dans laquelle il s'étend hors dudit coffret et permet le déplacement par roulement dudit container hors dudit véhicule électrique urbain, et une position, dite position rétractée, dans laquelle il est logé principalement dans ledit coffret tout en permettant le déplacement par roulement dudit container sur ledit plancher bas dudit véhicule électrique urbain, ledit passage de ladite position déployée à ladite position rétractée étant obtenue spontanément lors du chargement du container dans ledit véhicule électrique urbain par la combinaison du déplacement dudit caisson selon la direction longitudinale et un contact entre le container et une butée transversale ménagée sous ledit plancher bas dudit véhicule électrique urbain, et le passage de ladite position rétractée à ladite position déployée étant obtenu spontanément par gravité lors du déchargement dudit container dudit véhicule électrique urbain.

4. Système selon la revendication 3, **caractérisé en ce qu'**il comprend en outre, pour chaque organe roulant (16), une armature longitudinale (20) comprenant à une première extrémité longitudinale, au moins une roulette (22) de contact avec ladite butée transversale (112), et à une seconde extrémité longitudinale, un étrier (24) de support dudit organe roulant (16) monté mobile en rotation par rapport à ladite armature (20) autour d'un axe transversal, dit axe de pivotement, permettant audit organe roulant (16) de passer de ladite position déployée à ladite position rétractée lors du chargement du container (10) dans ledit véhicule et inversement lors du déchargement dudit container (10) hors dudit véhicule, chaque roulette de contact (22) formant en outre des moyens de roulement additionnels dudit container (10) sur ladite plateforme horizontale dudit véhicule lorsque lesdits organes roulants (16) sont dans ladite position rétractée.

5. Système selon la revendication 4, **caractérisé en ce que** chaque étrier (20) de support dudit organe roulant (16) comprend :
- un arbre (26) formant l'axe de pivotement s'étendant dans une lumière oblongue (28) verticale ménagée dans ladite armature (20) et configuré pour pouvoir se déplacer spontanément par gravité dans ladite lumière oblongue (28) d'une position, dite position verrouillée, à une position, dite position libre, et inversement par contact dudit organe roulant (16) avec le sol (130),
- une patte de verrouillage (30) configurée pour venir s'encastrer dans une mortaise (32) formée dans ladite armature (20) longitudinale dans ladite position verrouillée et pour pouvoir s'en désolidariser spontanément sous l'effet de la gravité lors du passage vers ladite position libre.

6. Système selon l'une des revendications 3 à 5, **caractérisé en ce qu'**au moins un véhicule électrique urbain (100) comprend une plateforme (110) de réception dudit container agencée en regard d'une ouverture d'accès (120) au véhicule, **caractérisé en ce que** ladite plateforme (110) s'étend à une distance inférieure à 30 cm sol, de préférence inférieure à 20 cm du sol, et supérieure à la distance qui sépare, dans la dite position déployée desdits organes roulants (16), l'axe de pivotement et la surface de contact desdits organes roulants avec le sol, et **en ce que** ladite plateforme (110) comprend une butée transversale (112) ménagée sous la plateforme dudit véhicule qui présente une portion inclinée formant une butée d'élévation (114) dudit container par contact avec desdites roulettes de contact dudit container et permettant de passer lesdits organes roulants de ladite position verrouillée à ladite position libre, et une portion verticale s'étendant vers le sol depuis ladite butée d'élévation formant une butée de basculement (116) dudit organe roulant de ladite position déployée libre à ladite position rétractée.

7. Système selon l'une des revendications 3 à 6, **caractérisé en ce que** chaque véhicule électrique urbain (100) est en outre équipé d'un bras amovible motorisé permettant de faciliter le déplacement du container dans des rues piétonnes ou des entrepôts.

## Patentansprüche

1. Verfahren zum Ausliefern mehrerer Pakete an mehrere Stadt-Empfänger (200) von einem stadtnahen Lagerraum aus, **dadurch gekennzeichnet, dass** es die Schritte umfasst, die bestehen aus:
- Unterbringung (E1) der mehreren Pakete in mehrere Einziehrollencontainer, worin mindestens ein Einziehrollencontainer umfasst:
o ein Gehäuse (12) mit mindestens einer Zugangsöffnung zu dem Gehäuse, um die Pakete aufzunehmen,
o Rollelemente (16) zum Bewegen des Containers in einer bevorzugten Vorschubrichtung und entlang einer Hauptvorschubrichtung, der sogenannten Längsrichtung,
o mindestens einen Aufnahmekasten für jedes Rollelement, der sich unterhalb des Gehäuses befindet,
o worin jedes Rollelement (16) in Bezug auf das Gehäuse beweglich montiert ist, und zwar zwischen einer so genannten ausgefahrenen Position, in der es aus dem Gehäuse herausragt und die rollende Versetzung des Containers aus einem Elektro-Stadtfahrzeug heraus ermöglicht, und einer so genannten eingefahrenen Position, in der es hauptsächlich in dem Gehäuse untergebracht ist und die rollende Versetzung des Containers auf dem unteren Boden des Elektro-Stadtfahrzeugs ermöglicht, wobei der Übergang von der ausgefahrenen Position in die eingefahrene Position spontan während des Beladens des Containers in das Elektro-Stadtfahrzeug durch die Kombination der Versetzung des Gehäuses in Längsrichtung und des Kontakts zwischen dem Container und einem unter dem unteren Boden des Elektro-Stadtfahrzeug vorgesehenen Queranschlag erfolgt, und wobei der Übergang von der eingefahrenen Position in die ausgefahrene Position spontan durch die Schwerkraft während des Entladens des Containers aus dem Elektro-Stadtfahrzeug erfolgt,
- Transportieren (E2) der mehreren Einziehrollencontainer in einem Radfahrzeug zu einer städtischen Logistikbasis,
- Entladen (E3) der Einziehrollencontainer in die städtische Logistikbasis,
- Beladen (E4) der Einziehrollencontainer in mehrere Elektro-Stadtfahrzeuge mit niedrigem Boden ohne Hebemittel,
- Bewegen (E5) der mit den Containern beladenen Elektro-Stadtfahrzeuge von der städtischen Logistikbasis zu den städtischen Empfängern und Entladen der Container von den Elektro-Stadtfahrzeugen ohne Hebemittel in der Nähe der Empfänger,
- Auslieferung (E6) jedes in jedem Einziehrollencontainer untergebrachten Pakets, die von jedem Elektro-Stadtfahrzeug entladen wurden, an jeden Paketempfänger.

2. Zustellverfahren nach Anspruch 1, **dadurch gekennzeichnet, dass** der Schritt, der darin besteht, jedes Paket des von jedem Elektro-Stadtfahrzeug transportierten Containers zuzustellen (E6), zudem einen Schritt umfasst, bei dem der Einziehrollencontainer durch einen motorisierten abnehmbaren Arm bewegt wird, der es ermöglicht, den Container leichter in Fußgängerzonen oder Lagerhäusern in die Nähe der Adressaten zu bewegen.

3. System zur Auslieferung mehrerer Pakete an mehrere städtische Empfänger aus einem stadtnahen Lagerbereich, welches umfasst:
- mehrere Einziehrollencontainer (10), die ausgestaltet sind, die mehreren der zu befördernden Pakete aufnehmen können,
- mindestens ein Radfahrzeug (20), das ausgestaltet ist, die mehreren Einziehrollencontainer (10) aufzunehmen und diese zu einer städtischen Logistikbasis zu bewegen,
- mehrere Niederflur-Elektro-Stadtfahrzeuge (100), die jeweils mindestens einen Einziehrollencontainer (10) aufnehmen können und dazu bestimmt sind, jedes Paket an jeden Empfänger zu liefern, wobei die Fahrzeuge und die Container ausgestaltet sind, das Be- und Entladen jedes Einziehrollencontainers in jedem Fahrzeug ohne Hebemittel zu ermöglichen,
**dadurch gekennzeichnet, dass** mindestens ein Einziehrollencontainer umfasst:
- ein Gehäuse (12), das mindestens eine Zugangsöffnung zum Gehäuse aufweist, um die Pakete aufzunehmen,
- Rollelemente (16) zum Bewegen des Containers in einer bevorzugten Vorschubrichtung und entlang einer Hauptvorschubrichtung, der sogenannten Längsrichtung,
- mindestens einen Aufnahmekasten für jedes Rollelement, der sich unter dem Gehäuse befindet,
- worin jedes Rollelement (16) in Bezug auf das Gehäuse zwischen einer so genannten ausgefahrenen Position, in der es aus dem Gehäuse herausragt und die rollende Versetzung des Containers aus dem Elektro-Stadtfahrzeug heraus ermöglicht, und einer so genannten eingefahrenen Position, in der es hauptsächlich in dem Gehäuse untergebracht ist und die rollende Versetzung des Containers auf dem unteren Boden des Elektro-Stadtfahrzeugs ermöglicht, beweglich montiert ist, wobei der Übergang von der ausgefahrenen Position in die eingefahrene Position spontan während des Beladens des Containers in das Elektro-Stadtfahrzeug durch die Kombination der Versetzung des Kastens in Längsrichtung und des Kontakts zwischen dem Container und einem unter dem unteren Boden des Elektro-Stadtfahrzeugs vorgesehenen Queranschlages erfolgt, und der Übergang von der eingefahrenen Position in die ausgefahrene Position spontan durch die Schwerkraft während des Entladens des Containers aus dem Elektro-Stadtfahrzeug erfolgt.

4. System nach Anspruch 3, **dadurch gekennzeichnet, dass** es zudem für jedes Rollelement (16) einen Längsrahmen (20) umfasst, der an einem ersten Längsende mindestens eine Rolle (22) für den Kontakt mit dem Queranschlag (112) und an einem zweiten Längsende eine Halterung (24) zur Aufnahme des Rollelements (16) aufweist, die in Bezug auf den Rahmen (20) um eine Querachse drehbar montiert ist, Drehachse genannt, die es dem Rollelement (16) ermöglicht, sich beim Beladen des Containers (10) in das Fahrzeug von der ausgefahrenen Position in die eingezogene Position und umgekehrt beim Entladen des Containers (10) aus dem Fahrzeug zu bewegen, wobei jede Kontaktrolle (22) zudem ein zusätzliches Rollmittel für den Container (10) auf der horizontalen Plattform des Fahrzeugs bildet, wenn sich die Rollelemente (16) in der eingezogenen Position befinden.

5. System nach Anspruch 4, **dadurch gekennzeichnet, dass** jede Halterung (20) zur Aufnahme des Rollelements (16) umfasst:
- eine die Drehachse bildende Welle (26), die sich in einen vertikalen, länglichen Schlitz (28) erstreckt, der in dem Rahmen (20) ausgebildet ist, und die ausgestaltet ist, sich durch die Schwerkraft in dem länglichen Schlitz (28) spontan von einer Position, die als verriegelte Position bezeichnet wird, in eine Position, die als freie Position bezeichnet wird, und umgekehrt durch den Kontakt des Rollelements (16) mit dem Boden (130) zu bewegen,
- eine Verriegelungsnase (30), die ausgestaltet ist, in der verriegelten Position in eine in dem Längsrahmen (20) ausgebildete Aussparung (32) einzugreifen und sich unter der Wirkung der Schwerkraft spontan zu lösen, wenn sie sich in die freie Position bewegt.

6. System nach einem der Ansprüche 3 bis 5, **dadurch gekennzeichnet, dass** mindestens ein Elektro-Stadtfahrzeug (100) eine Plattform (110) zur Aufnahme des Containers umfasst, die gegenüber einer Zugangsöffnung (120) des Fahrzeugs angeordnet ist, **dadurch gekennzeichnet, dass** sich die Plattform (110) in einem Abstand von weniger als 30 cm vom Boden, vorzugsweise weniger als 20 cm vom Boden, erstreckt und größer ist als der Abstand, der in der ausgefahrenen Position der Rollelemente (16) die Schwenkachse und die Kontaktfläche der Rollelemente vom Boden trennt, und dass die Plattform (110) einen Queranschlag (112) umfasst, der unter der Plattform des Fahrzeugs vorgesehen ist und einen geneigten Abschnitt aufweist, der durch Kontakt mit den Kontaktrollen des Containers einen Höhenanschlag (114) für den Container ausbildet und es ermöglicht, die Rollelemente aus der verriegelten Position in die freie Position zu bewegen, sowie einen vertikalen Abschnitt, der sich von dem Höhenanschlag aus in Richtung des Bodens erstreckt und einen Kippanschlag (116) für das Rollelement aus der ausgefahrenen freien Position in die eingezogene Position bildet.

7. System nach einem der Ansprüche 3 bis 6, **dadurch gekennzeichnet, dass** jedes Elektro-Stadtfahrzeug (100) zudem mit einem motorisierten abnehmbaren Arm ausgestattet ist, um die Bewegung des Containers in Fußgängerzonen oder Lagerhäusern zu erleichtern.

## Claims

1. Method for delivering a plurality of parcels to a plurality of urban recipients (200) from a peri-urban storage space, **characterized in that** it comprises the steps consisting of :
- housing (E1) said plurality of packages in a plurality of shrink-wheel containers, at least one container with retractable wheels container comprising :
∘ a casing (12) comprising at least one access opening to the casing to accommodate said parcels,
∘ rolling elements (16) for moving said box in a preferred direction of advance and along a main direction of advance, known as the longitudinal direction,
∘ at least one housing for each rolling element, located beneath said casing,
∘ each rolling member (16) being mounted so as to be movable relative to the casing between a position, referred to as the deployed position, in which it extends out of said casing and enables rolling displacement of said container out of an urban electric vehicle, and a position, referred to as the retracted position, in which it is housed mainly in said casing while enabling rolling displacement of said container on said low floor of said urban electric vehicle, said passage from said deployed position to said retracted position being obtained spontaneously during loading of the container into said urban electric vehicle by the combination of displacement of said casing in the longitudinal direction and contact between the container and a transverse stop provided under said low floor of said urban electric vehicle, and passage from said retracted position to said deployed position being obtained spontaneously by gravity during unloading of said container from said urban electric vehicle,
- transporting (E2) said plurality containers with retractable wheels in a wheeled vehicle to an urban logistics base,
- unloading (E3) said containers with retractable wheels into said urban logistics base,
- loading (E4) said containers with retractable wheels into a plurality of low-floor urban electric vehicles without lifting means,
- move (E5) said urban electric vehicles loaded with said containers from said urban logistics base to said urban consignees and unload said containers from said urban electric vehicles without lifting means in the vicinity of said consignees,
- delivering (E6) each parcel housed in each container with retractable wheels unloaded from each urban electric vehicle to each parcel recipient.

2. A delivery method according to claim 1, **characterized in that** said step which consists in delivering (E6) each parcel of the container transported by each urban electric vehicle further comprises a step of moving the container with retractable wheels by a motorized removable arm enabling the container to be moved more easily in pedestrian streets or warehouses in the vicinity of said addressees.

3. A system for delivering a plurality of parcels to a plurality of urban recipients from a peri-urban storage area comprising :
- a plurality of containers (10) with retractable wheels configured to accommodate said plurality of parcels to be conveyed,
- at least one wheeled vehicle (20) adapted to house said plurality of retractable-wheel containers (10) and to move them to an urban logistics base,
- a plurality of low-floor urban electric vehicles (100) each adapted to receive at least one container with retractable wheels (10) and intended to deliver each parcel to each recipient, said vehicles and said containers being configured to allow loading and unloading of each container with retractable wheels in each vehicle without lifting means,
**characterized in that** at least one container with retractable wheels comprises :
- a casing (12) comprising at least one access opening to the casing to accommodate said packages,
- rolling elements (16) for moving said box in a preferred direction of advance and along a main direction of advance, known as the longitudinal direction,
- at least one housing box for each rolling element, located beneath said csing,
- each rolling member (16) being mounted so as to be movable relative to the casing between a position, referred to as the deployed position, in which it extends out of said casing and enables rolling displacement of said container out of said urban electric vehicle, and a position, referred to as the retracted position, in which it is housed mainly in said casing while enabling rolling displacement of said container on said low floor of said urban electric vehicle, said passage from said deployed position to said retracted position being obtained spontaneously during loading of the container into said urban electric vehicle by the combination of displacement of said box in the longitudinal direction and contact between the container and a transverse stop provided under said low floor of said urban electric vehicle, and passage from said retracted position to said deployed position being obtained spontaneously by gravity during unloading of said container from said urban electric vehicle.

4. System according to claim 3, **characterized in that** it further comprises, for each rolling member (16), a longitudinal frame (20) comprising, at a first longitudinal end, at least one roller (22) for contact with said transverse stop (112), and at a second longitudinal end, a bracket (24) for supporting said rolling member (16) mounted so as to be able to rotate with respect to said frame (20) about a transverse axis, known as the pivot axis, enabling said rolling member (16) to move from said deployed position to said retracted position when loading the container (10) into said vehicle and vice versa when unloading said container (10) from said vehicle, each contact roller (22) further forming additional rolling means for said container (10) on said horizontal platform of said vehicle when said rolling members (16) are in said retracted position.

5. System according to claim 4, **characterized in that** each bracket (20) for supporting said rolling member (16) comprises :
- a shaft (26) forming the pivot axis, extending into a vertical oblong slot (28) formed in said frame (20) and configured to be able to move spontaneously by gravity in said oblong slot (28) from a position, called the locked position, to a position, called the free position, and vice versa by contact of said rolling member (16) with the ground (130),
- a locking lug (30) configured to engage in a mortise (32) formed in said longitudinal frame (20) in said locked position and to disengage spontaneously under the effect of gravity when moving to said free position.

6. System according to one of claims 3 to 5, **characterized in that** at least one urban electric vehicle (100) comprises a platform (110) for receiving said container arranged opposite an access opening (120) to the vehicle, **characterized in that** said platform (110) extends at a distance of less than 30 cm from the ground, preferably less than 20 cm from the ground, and greater than the distance which separates, in said deployed position of said rolling members (16), the pivot axis and the contact surface of said rolling members with the ground, and **in that** said platform (110) comprises a transverse stop (112) provided under the platform of said vehicle which has an inclined portion forming an elevation stop (114) for said container by contact with said contact wheels of said container and enabling said rolling members to be moved from said locked position to said free position, and a vertical portion extending towards the ground from said elevation stop forming a tilting stop (116) for said rolling member from said deployed free position to said retracted position.

7. System according to one of claims 3 to 6, **characterized in that** each urban electric vehicle (100) is further equipped with a motorized removable arm to facilitate movement of the container in pedestrian streets or warehouses.
